# EUROPEAN PATENT APPLICATION

(11) **EP 1 469 097 A1**
(43) Date of publication of application: **20.10.2004**
(21) Application number: 04016801.5
(22) Date of filing: 03.02.2003
(51) Int. Cl.: C23C 4/04

(54) **Abradable coating and method for forming same**

(30) Priority: 14.02.2002 JP 2002036108
(62) Divisional of application: 03002171.1
(71) Applicant: Mitsubishi Heavy Industries, Ltd., Tokyo (JP)
(72) Inventor: Hasezaki, Kazuhiro, Komaki Aichi-Ken 485-8561 (JP); Shimizu, Kunihiro, Komaki Aichi-Ken 485-8561 (JP); Senda, Makoto, Nagoya Aichi-ken 455-8515 (JP)
(74) Representative: Henkel, Feiler & Hänzel

(57) **Abstract**

The present invention provides an abradable coating which is applied to the surfaces of stationary parts in rotary machinery such as gas turbines and does not cause damage or other trouble to the blades, as well as a method for forming the same. This method for forming an abradable coating comprises the steps of coating a shroud material with a partially stabilized zirconia ceramic material to form a zirconia ceramic layer having a cubic or tetragonal crystal structure on the surface of the shroud material; and subjecting the shroud material having the zirconia ceramic layer formed thereon to high-temperature water treatment at a temperature of 100 to 450°C for 1 to 300 hours and thereby transforming the crystal structure of the zirconia ceramic layer into a monoclinic crystal structure.

## Description

### FIELD OF THE INVENTION AND RELATED ART STATEMENT

This invention relates to an abradable coating applied to the surfaces of stationary parts in rotary machinery such as gas turbines, and a method for forming the same. More particularly, it relates to an abradable coating having excellent cuttability which is applied, for example, to the shrouds of gas turbines, and a method for forming the same.

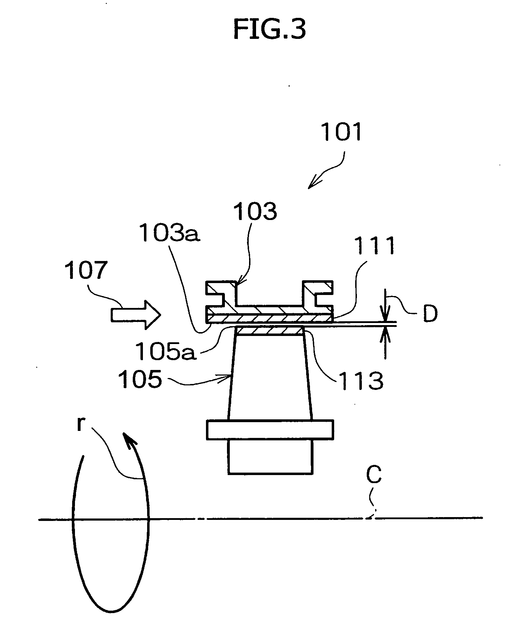

As illustrated in FIG. 3, a gas turbine 101 usually includes a stationary shroud 103 attached to a casing (not shown) and blades 105 disposed within shroud 103 and capable of rotating around an axis of rotation (C) in the direction of rotation (r) shown by an arrow. Moreover, a very small clearance D is provided between the outer peripheral edge 105a of each blade 105 and the inner circumferential surface 103a of shroud 103. In order to suppress the leakage of hot gas, such as hot gas at about 1,500°C, through this clearance D and thereby improve the performance of gas turbine 101, it is desirable to minimize the aforesaid clearance D. However, if the clearance D is unduly small, there is a possibility that, during the rotation of blades 105, the tips of blades 105 may come into contact with the inner circumferential surface 103a of shroud 103 and thereby cause damage or other trouble to blades 105.

For this reason, it has been conventional practice to apply an abradable coating 111 having cuttability to the inner circumferential surface 103a of the aforesaid shroud 103. Consequently, even if the tips of blades 105 come into contact with the inner circumferential surface 103a of shroud 103, the aforesaid abradable coating 111 is cut away without causing damage or other trouble to rotating blades 105, and thereby provides protection for blades 105.

The aforesaid abradable coating 111, which has conventionally been used for this purpose, primarily comprises a coating formed of a partially stabilized zirconia ceramic material such as ZrO₂+8wt% Y₂O₃. Since this ceramic material is hard as evidenced by a Vickers hardness (Hv) of about 1,000 at room temperature, abradable coating 111 may actually damage the tips of rotating blade 105 on the contrary. Accordingly, an abrasive coating 113 harder than the abradable coating 111 of shroud 103 is applied to the surface of the outer peripheral edge 105a of each blade 105.

On the other hand, when the aforesaid abradable coating 111 is applied to gas turbine engines for use in helicopters, aircraft and the like, there is a possibility that sand, dust and the like may be drawn into the engine during flight and cause the blades and the shrouds to be worn away.

Thus, when conventional abradable coating 111 is applied to gas turbines, the possibility of damaging the tips of blades 105 cannot be completely eliminated. Moreover, when it is applied to the gas turbine engines of helicopters, aircraft and the like, there is a possibility that the blades and the shrouds may be worn away.

An object of the present invention is to provide an abradable coating which is applied to the surfaces of stationary parts in rotary machinery such as gas turbines, does not cause damage or other trouble to the blades during a test run, and exhibits excellent abrasion resistance during normal operations, as well as a method for forming the same.

### OBJECT AND SUMMARY OF THE INVENTION

The present invention provides a method for forming an abradable coating which comprises the steps of coating a shroud material with a partially stabilized zirconia ceramic material to form a zirconia ceramic layer having a cubic or tetragonal crystal structure on the surface of the shroud material; and subjecting the shroud material having the zirconia ceramic layer formed thereon to high-temperature water treatment at a temperature of 100 to 450°C for 1 to 300 hours and thereby transforming the crystal structure of the zirconia ceramic layer into a monoclinic crystal structure.

Usually, a zirconia ceramic material has a cubic or tetragonal crystal structure and is a hard material as evidenced by a Vickers hardness (Hv) of about 1,000. When this zirconia ceramic material is heat-treated in high-temperature water, stress-induced martensitic transformation occurs in the zirconia ceramic material owing to a high temperature applied thereto by water vapor, so that its crystal structure changes into a monoclinic crystal structure. This monoclinic zirconia ceramic material is soft as evidenced by a Vickers hardness (Hv) of about 800 or less, and has good cuttability. Accordingly, when this monoclinic zirconia ceramic material is applied to the shrouds of a gas turbine used in a high-temperature environment, it is soft and exhibits excellent cuttability at the time of a first operation (i.e., a test run) carried out to adjust the tip clearance between the blades and the shrouds. Moreover, when the zirconia ceramic material undergoes a thermal history by exposure to high temperatures (e.g., 1,000°C or above) resulting from gas turbine operation during the first operation, its crystal structure is transformed into a cubic or tetragonal crystal structure. Consequently, it increases in hardness and can maintain abrasion resistance during second and further operations.

The aforesaid high-temperature water treatment can be carried out, for example, by use of an autoclave. The temperature of the high-temperature water is in the range of 100 to 450°C and preferably 150 to 350°C, and the treating time is in the range of 1 to 300 hours and preferably 1 to 30 hours.

If the temperature of the high-temperature water is lower than 100°C or the treating time is less than 1 hour, stress-induced martensitic transformation will not occur easily and the zirconia ceramic material cannot be sufficiently transformed into a monoclinic crystal structure. On the other hand, if the temperature of the high-temperature water is higher than 450°C, the use of the high-temperature water treatment apparatus will be limited, and if the treating time is greater than 300 hours, the coating treatment will require too much time and cost for practical purposes.

Furthermore, when the abradable coating of the present invention is applied to a gas turbine engine for use in helicopters, aircraft and the like, the crystal structure of the abradable coating is transformed into a cubic or tetragonal crystal structure owing to the thermal environment resulting from a test run of the gas turbine, and hence shows an increase in hardness. Consequently, even if sand, dust and the like are drawn into the aforesaid gas turbine engine during second and further normal operations, the abradable coating can maintain abrasion resistance and hence prevent the blades and the shroud from being worn away.

According to one embodiment of the present invention, there is provided a method for forming an abradable coating which comprises the steps of coating a shroud material with a partially stabilized zirconia ceramic material to form a zirconia ceramic layer having a cubic or tetragonal crystal structure on the surface of the shroud material; and subjecting the zirconia ceramic layer to shot peening and thereby transforming the crystal structure of the zirconia ceramic layer into a monoclinic crystal structure.

Another embodiment of the present invention comprises a method for forming an abradable coating in which the aforesaid partially stabilized zirconia ceramic material contains at least one stabilizer selected from the group consisting of Y₂O₃, CaO, MgO and CeO₂.

This zirconia ceramic material needs to be a partially stabilized zirconia ceramic material such as ZrO₂+0.3-20wt% Y₂O₃.

Still another embodiment of the present invention comprises a method for forming an abradable coating in which the aforesaid stabilizer is Y₂O₃ and the aforesaid partially stabilized zirconia ceramic material comprises 100 parts by weight of ZrO₂ and 0.3 to 20 parts by weight of Y₂O₃.

If less than 0.3 part by weight of Y₂O₃ is added to 100 parts by weight of ZrO₂, it will be difficult to form a partially stabilized zirconia ceramic material. In this case, when the zirconia ceramic layer undergoes a thermal history due to gas turbine operation or the like, its crystal structure is transformed from a monoclinic crystal structure into a cubic or tetragonal crystal structure. However, when it is cooled afterwards, it is returned to the original soft monoclinic crystal structure and hence has poor abrasion resistance.

On the other hand, if greater than 20 parts by weight of Y₂O₃ is added to ZrO₂, the zirconia ceramic material will be completely stabilized and fail to undergo stress-induced martensitic transformation. Consequently, the crystal structure of the zirconia ceramic layer is not sufficiently transformed from a monoclinic crystal structure into a cubic or tetragonal crystal structure.

A further embodiment of the present invention comprises a method for forming an abradable coating in which the aforesaid shot peening is carried out by using a shot material having a higher hardness than zirconia.

Still a further embodiment of the present invention comprises a method for forming an abradable coating in which the aforesaid shot material comprises silicon carbide or tungsten carbide.

Furthermore, the present invention also provides an abradable coating formed by any of the above-described methods.

One embodiment of the present invention comprises a shroud having the aforesaid abradable coating.

Another embodiment of the present invention comprises a gas turbine having the aforesaid shroud.

When the abradable coating of the present invention is applied to the shrouds of a gas turbine used in a high-temperature environment, it is soft and exhibits excellent cuttability at the time of the first operation of the gas turbine which is carried out to adjust the tip clearance. Consequently, even if the tips of blades come into contact with the shrouds, the abradable coating is cut away without causing damage or other trouble to the rotating blades. Thus, an improvement in the performance of the gas turbine can be achieved by reducing the tip clearance. Moreover, once the shrouds undergo a thermal history by exposure to high temperatures, the abradable coating is transformed into its original cubic or tetragonal crystal structure. Consequently, it shows an improvement in abrasion resistance and can hence enhance the durability of the gas turbine.

Furthermore, when the abradable coating of the present invention is applied to a gas turbine engine for use in helicopters, aircraft and the like, it increases in hardness after having undergone a thermal history by exposure to high temperatures, and can maintain abrasion resistance. Consequently, even if sand, dust and the like are drawn into the gas turbine engine, the blades and the shrouds will not be worn away.

### BRIEF DESCRIPTION OF THE DRAWINGS

FIG. 1 is a flow chart illustrating a method for forming an abradable coating in accordance with a first embodiment;
FIG. 2 is a flow chart illustrating a method for forming an abradable coating in accordance with a second embodiment; and
FIG. 3 is a schematic view showing the construction of a gas turbine.

### DETAILED DESCRIPTION OF PREFERRED EMBODIMENTS

The methods for forming an abradable coating in accordance with two embodiments of the present invention will be more specifically described hereinbelow with reference to the accompanying drawings.

### [First embodiment]

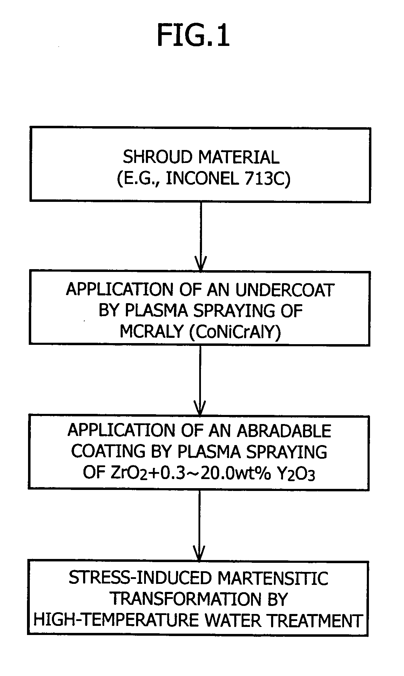

FIG. 1 is a flow chart illustrating a method for forming an abradable coating in accordance with a first embodiment.

First of all, an undercoat is applied to the surface of a shroud material comprising a heat-resisting steel such as Inconel 713C. This undercoat is disposed between the shroud material and a zirconia ceramic layer that will be described later, and has the function of relaxing and absorbing stresses caused by the thermal expansion of them. For the undercoat, there may be used MCrAlY (e.g., CoNiCrAlY) which is commonly used as a coating material having oxidation resistance and high-temperature corrosion resistance.

Specifically, the surface of the aforesaid shroud material is coated with MCrAlY to a thickness of 100 to 250 µm, by plasma spraying in air. For spraying conditions, it is preferable to use an electric current of about 500 to 600 A and a working gas comprising a gaseous mixture composed of argon gas and hydrogen gas. The mixing ratio of argon gas and hydrogen gas in the gaseous mixture is preferably about 5:1, and the total flow rate of the gaseous mixture is preferably in the range of 40 to 50 liters per minute. The distance between the plasma spraying torch and the shroud material is preferably in the range of 100 to 150 mm, and the feed rate of powder is preferably in the range of 30 to 40 g per minute. The plasma spraying is carried out by moving the spraying torch back and forth across the surface of the aforesaid shroud material.

Then, ZrO₂+0.3-20wt% Y₂O₃ (e.g., ZrO₂+8wt% Y₂O₃) is further plasma-sprayed over the aforesaid undercoat in air to a thickness of 0.3 to 2.2 mm, thus forming a zirconia ceramic layer. For spraying conditions, it is preferable to use an electric current of about 500 to 600 A and a working gas comprising a gaseous mixture composed of argon gas and hydrogen gas. The mixing ratio of argon gas and hydrogen gas in the gaseous mixture is preferably about 5:1, and the total flow rate thereof is preferably in the range of 40 to 50 liters per minute. The distance between the plasma spraying torch and the undercoat is preferably in the range of 100 to 150 mm, and the feed rate of powder is preferably in the range of 30 to 40 g per minute. The plasma spraying is carried out by moving the spraying torch back and forth across the surface of the aforesaid undercoat.

Thereafter, the shroud material on which the undercoat and the zirconia ceramic layer have been formed is subjected to high-temperature water treatment. Thus, the zirconia ceramic layer undergoes stress-induced martensitic transformation to form an abradable coating. The temperature of the high-temperature water used for the aforesaid high-temperature water treatment is in the range of 100 to 450°C, and the treating time is in the range of 1 to 300 hours. For example, the abradable coating can be formed by placing the coated shroud material in an autoclave containing purified water and holding it at a temperature of 300°C for 10 hours.

### [Second embodiment]

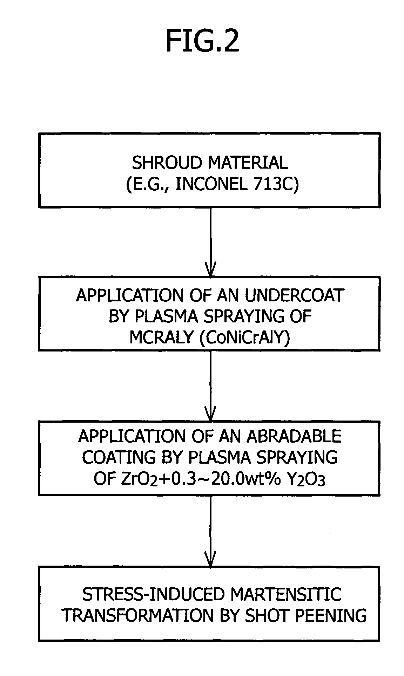

FIG. 2 is a flow chart illustrating a method for forming an abradable coating in accordance with a second embodiment. This method includes the step of subjecting the zirconia ceramic layer to shot peening and thereby causing it to undergo stress-induced martensitic transformation and produce an abradable coating having excellent cuttability.

First of all, an undercoat is applied to a shroud material comprising, for example, Inconel 713C. This undercoat is provided to relax the differential thermal expansion between the shroud material and a zirconia ceramic layer that will be described later, and is formed by plasma-spraying commonly used MCrAlY (e.g., CoNiCrAlY) to a thickness of 100 to 250 µm.

This plasma spraying is carried out in air, and it is preferable to use an electric current of about 500 to 600 A and a working gas comprising a gaseous mixture composed of argon gas and hydrogen gas. The mixing ratio of argon gas and hydrogen gas in the gaseous mixture is preferably about 5:1, and the total flow rate of the gaseous mixture is preferably in the range of 40 to 50 liters per minute. The distance between the plasma spraying torch and the shroud material is preferably in the range of 100 to 150 mm, and the feed rate of powder is preferably in the range of 30 to 40 g per minute. The plasma spraying is carried out by moving the spraying torch back and forth across the shroud material.

Then, ZrO₂+0.3-20wt% Y₂O₃ is further plasma-sprayed over the undercoat to a thickness of 0.3 to 2.2 mm, thus forming a zirconia ceramic layer. This plasma spraying is carried out in air, and it is preferable to use an electric current of about 500 to 600 A and a working gas comprising a gaseous mixture composed of argon gas and hydrogen gas. The mixing ratio of argon gas and hydrogen gas is preferably about 5:1, and the total flow rate thereof is preferably in the range of 40 to 50 liters per minute. The distance between the plasma spraying torch and the undercoat is preferably in the range of 100 to 150 mm, and the feed rate of powder is preferably in the range of 30 to 40 g per minute. The plasma spraying is carried out by moving the spraying torch back and forth across the shroud material having the aforesaid undercoat sprayed thereon until it is coated to a thickness of 0.3 to 2.2 mm.

Thereafter, the shroud material on which the undercoat and the zirconia ceramic layer have been formed is subjected to shot peening by means of an air-operated accelerator or the like. This causes the zirconia ceramic layer to undergo stress-induced martensitic transformation and can thereby transform it into a monoclinic crystal structure. In the shot peening, it is preferable to use shot particles having an average diameter of 0.1 to 0.6 mm and formed of silicon carbide harder than zirconia. The working pressure is preferably in the range of 0.3 to 0.7 MPa, and the feed rate of shots is preferably in the range of 5 to 30 kg per minute. Moreover, it is preferable that the blasting angle be 90°, the blasting time be in the range of 1 to 30 minutes, and the distance between the shot peening nozzle and the shroud subjected to shot peening be in the range of 10 to 30 cm.

### EXAMPLES

The present invention is further illustrated by the following examples.

### Example 1

As illustrated in FIG. 1, Inconel 713C was used as the shroud material. First of all, in order to relax the differential thermal expansion between the shroud material and a zirconia ceramic layer as will be described later, an undercoat was applied to the shroud material by plasma-spraying CoNiCrAlY to a thickness of 100 to 250 µm. This plasma spraying was carried out in air at an electric current of about 500 to 600 A. As the working gas, there was used a gaseous mixture composed of argon gas and hydrogen gas. The mixing ratio of argon gas and hydrogen gas was about 5:1, and the total flow rate thereof was in the range of 40 to 50 liters per minute. The distance between the plasma spraying torch and the shroud material was in the range of 100 to 150 mm, and the feed rate of powder was in the range of 30 to 40 g per minute. The plasma spraying was carried out by moving the spraying torch back and forth across Inconel 713C until it was coated with CoNiCrAlY to a thickness of 100 to 250 µm.

Thereafter, ZrO₂+8wt% Y₂O₃ was further plasma-sprayed over the undercoat to a thickness of 0.3 to 2.2 mm, thus forming a zirconia ceramic layer. This plasma spraying was carried out in air at an electric current of about 500 to 600 A. As the working gas, there was used a gaseous mixture composed of argon gas and hydrogen gas. The mixing ratio of argon gas and hydrogen gas was about 5:1, and the total flow rate thereof was in the range of 40 to 50 liters per minute. The distance between the plasma spraying torch and the shroud material was in the range of 100 to 150 mm, and the feed rate of powder was in the range of 30 to 40 g per minute. The plasma spraying was carried out by moving the spraying torch back and forth across the undercoat until it was coated to a thickness of 0.3 to 2.2 mm.

Thereafter, in order to cause the zirconia ceramic layer comprising ZrO₂+8wt% Y₂O₃ to undergo stress-induced martensitic transformation, the coated shroud material was placed in an autoclave containing purified water and held at a temperature of 300°C for 10 hours.

Table 1 shows the Vickers hardnesses of the abradable coating treated in this Example 1, at several stages of the treatment. For purposes of comparison, data on ZrO₂ and ZrO₂+30wt% Y₂O₃ that are zirconia ceramic materials outside the scope of the present invention is also shown.

Vickers hardness was measured by forcing a diamond indenter into the surface having a zirconia coating formed thereon, according to JIS Z 2244 "Vickers Hardness Test--Testing Method". Moreover, in order to examine the thermal effect resulting from application to a gas turbine, a gas turbine was assembled by using a shroud having the coating of this Example 1, and operated under rated conditions for 10 hours.

**Table 1**

| Unit: Hv | | | |
|---|---|---|---|
| | Example 1 | Comparative Example 1 | Comparative Example 2 |
| Composition of coating | ZrO₂ + 8wt%Y₂O₃ | ZrO₂ | ZrO₂ + 30wt%Y₂O₃ |
| After spraying | 1000 | 700 | 1000 |
| After high-tempera ture water treatment | 800 | 700 | 1000 |
| After rated combustion test of gas turbine | 1000 | 700 | 1000 |

As shown in Table 1, the present invention could cause stress-induced martensitic transformation in a coating comprising a zirconia ceramic material by subjecting it to high-temperature water treatment, and thus reduce its hardness.

### Example 2

As illustrated in FIG. 2, Inconel 713C was used as the shroud material. First of all, in order to relax the differential thermal expansion between the shroud material and a zirconia ceramic layer as will be described later, an undercoat was applied to the shroud material by plasma-spraying CoNiCrAlY in air to a thickness of 100 to 250 µm. This plasma spraying was carried out by using an electric current of about 500 to 600 A and a working gas comprising a gaseous mixture composed of argon gas and hydrogen gas. The mixing ratio of argon gas and hydrogen gas was about 5:1, and the total flow rate thereof was in the range of 40 to 50 liters per minute. The distance between the plasma spraying torch and the shroud material was in the range of 100 to 150 mm, and the feed rate of powder was in the range of 30 to 40 g per minute. The plasma spraying was carried out by moving the spraying torch back and forth across the shroud material until it was coated to a thickness of 100 to 250 µm.

Thereafter, ZrO₂+8wt% Y₂O₃ was further plasma-sprayed over the undercoat in air to form a zirconia ceramic layer having a thickness of 0.3 to 2.2 mm. This plasma spraying was carried out by using an electric current of about 500 to 600 A and a working gas comprising a gaseous mixture composed of argon gas and hydrogen gas. The mixing ratio of argon gas and hydrogen gas was about 5:1, and the total flow rate thereof was in the range of 40 to 50 liters per minute. The distance between the plasma spraying torch and the shroud material was in the range of 100 to 150 mm, and the feed rate of powder was in the range of 30 to 40 g per minute. The plasma spraying was carried out by moving the spraying torch back and forth across the undercoat until it was coated to a thickness of 0.3 to 2.2 mm.

After these spraying steps, in order to cause stress-induced martensitic transformation, the zirconia ceramic layer was subjected to shot peening by means of an air-operated accelerator. In this shot peening, there were used shot particles having an average diameter of 0.1 to 0.6 mm and formed of silicon carbide harder than zirconia. The working pressure was in the range of 0.3 to 0.7 MPa, the feed rate of shots was in the range of 5 to 30 kg per minute, and the blasting angle was 90°. The blasting time was in the range of 1 to 30 minutes, and the distance between the shot peening nozzle and the shroud was in the range of 10 to 30 cm.

Table 2 shows the Vickers hardnesses of the abradable coating treated in this Example 2, at several stages of the treatment. For purposes of comparison, data on coatings formed in the same manner by using ZrO₂ and ZrO₂+30wt% Y₂O₃ that are outside the scope of the present invention is also shown.

Vickers hardness was measured by forcing a diamond indenter into the surface having a zirconia coating formed thereon, according to JIS Z 2244 "Vickers Hardness Test--Testing Method". Moreover, in order to examine the thermal effect resulting from operation, a gas turbine was assembled and operated under rated conditions for 10 hours.

**Table 2**

| Unit: Hv | | | |
|---|---|---|---|
| | Example 2 | Comparative Example 3 | Comparative Example 4 |
| Composition of coating | ZrO₂ + 8wt%Y₂O₃ | ZrO₂ | ZrO₂ + 30wt%Y₂O₃ |
| After spraying | 1000 | 700 | 1000 |
| After shot peening | 800 | 700 | 1000 |
| After rated combustion test of gas turbine | 1000 | 700 | 1000 |

As can be seen from Table 2, the present invention could cause stress-induced martensitic transformation in a coating comprising a zirconia ceramic material by subjecting it to shot peening, and thus reduce its hardness.

## Claims

1. A method for forming an abradable coating which comprises the steps of coating a shroud material with a partially stabilized zirconia ceramic material to form a zirconia ceramic layer having a cubic or tetragonal crystal structure on the surface of said shroud material; and subjecting said shroud material having the zirconia ceramic layer formed thereon to high-temperature water treatment at a temperature of 100 to 450°C for 1 to 300 hours and thereby transforming the crystal structure of the zirconia ceramic layer into a monoclinic crystal structure.

2. A method for forming an abradable coating as claimed in claim 1 wherein said partially stabilized zirconia ceramic material contains at least one stabilizer selected from the group consisting of Y₂O₃, CaO, MgO and CeO₂.
